# NEUE EUROPÄISCHE PATENTSCHRIFT

(11) **EP 2 613 970 B2**
(45) Veröffentlichungstag und Bekanntmachung des Hinweises auf die Entscheidung über den Einspruch: **28.08.2019**
(45) Hinweis auf die Patenterteilung: 11.05.2016
(21) Anmeldenummer: 11757599.3
(22) Anmeldetag: 12.09.2011
(51) Int. Cl.: B60N 2/68

(54) **VERFAHREN ZUR HERSTELLUNG EINER SITZLEHNENRÜCKWAND**
METHOD FOR PRODUCING A REAR WALL OF A SEAT BACKREST
PROCÉDÉ POUR FABRIQUER UNE PAROI ARRIÈRE DE DOSSIER DE SIÈGE

(30) Priorität: 10.09.2010 DE 102010044948
(43) Veröffentlichungstag der Anmeldung: 17.07.2013
(73) Patentinhaber: Adient Luxembourg Holding S.à r.l., 1855 Luxembourg (LU)
(72) Erfinder: ZYNDA, Martin, 51399 Burscheid (DE); NUYAN, Vedat, 42287 Wuppertal (DE); MEIER, Bernd, 57439 Attendorn (DE); RIBARIC, David, 50735 Köln (DE)
(74) Vertreter: Finger, Catrin
(86) Internationale Anmeldenummer: PCT/EP2011/065775
(87) Internationale Veröffentlichungsnummer: WO 2012/032189

(56) Entgegenhaltungen:
- EP-A1- 2 490 920
- EP-A2- 1 916 440
- EP-B1- 1 581 381
- WO-A2-2011/029430
- DE-A1-102006 012 699
- DE-A1-102009 034 767
- DE-U1-202008 015 401
- Dr. Rolf Langbein: "Einsatz von Organoblech forciert den Leichtbau in der Hybridtechnik", www.autokon.de Automobil Konstruktion, 23. August 2010 (2010-08-23), XP002664235, Gefunden im Internet: URL:http://www.autokon.de/home/-/article/1 6537511/29464061/Bauteile-immer-komplexer- und-leichter/art_co_INSTANCE_0000/maximize d/ [gefunden am 2011-11-23]
- Lanxess: "Technische Information: Organoblech-die Innovation in der Hybridtchnik", , 25. Februar 2009 (2009-02-25), XP002664236, Gefunden im Internet: URL:http://techcenter.lanxess.com/scp/emea /de/docguard/TI_2009-003_DE_Organoblech.pd f?docId=12427922 [gefunden am 2011-11-23]

## Beschreibung

Die Erfindung betrifft ein Verfahren zur Herstellung einer Sitzlehnenrückwand nach den Merkmalen des Oberbegriffs des Anspruchs 1.

Im Stand der Technik werden Sitzlehnenrückwände aus so genannten Organoblechen gefertigt. Organobleche sind endlosfaserverstärkte Thermoplastplatten. Da das Organoblech eine thermoplastische Matrix besitzt, kann es aufgeschmolzen und mit dem gleichen Thermoplast umspritzt werden. Hierbei wird zwischen zwei Verfahren unterschieden. Beim ersten Verfahren werden vorgeformte Organobleche in ein Spritzwerkzeug eingelegt und mit dem Thermoplast umspritzt. Beim zweiten Verfahren erfolgt die Umformung des Organoblechs direkt im Spritzwerkzeug.

Aus den folgenden Artikeln
- Dr. Rolf Langbein: "Einsatz von Organoblech forciert den Leichtbau in der Hybridtechnik", www.autokon.de, Automobilkonstruktion, 23. August 2010 (2010-08-23), gefunden im Internet: URL: http://www.autokon.de/home/-article/16537511/29464061/Bauteile-immer-komplexer-und-leichter/art_co_INSTANCE_0000/maximized/
   und
Lanxess: "Technische Information: Organoblech - die Innovation in der Hybridtechnik", 25 Februar 2009 (2009-02-25), gefunden im Internet: URL: http://techcenter.lanxess.com/scp/emea/de/docguard/TI_2009-003_DE_Organoblech.pdf?docld=12427922
   ist es bekannt, ein Organoblech in einem Spritzgießwerkzeug mit Verrippungen stoffschlüssig zu verstärken.

Der Erfindung liegt die Aufgabe zugrunde, ein verbessertes Verfahren zur Herstellung einer Sitzlehnenrückwand anzugeben.

Die Aufgabe wird erfindungsgemäß durch ein Verfahren zur Herstellung einer Sitzlehnenrückwand mit den Merkmalen des Anspruchs 1 gelöst.

Bevorzugte Ausgestaltungen und Weiterbildungen der Erfindung sind in den abhängigen Ansprüchen angegeben.

Beim Verfahren zur Herstellung einer Sitzlehnenrückwand aus zumindest einem Organoblech wird zumindest ein Organoblech in einem Spritzwerkzeug mit einer Rippenstruktur hinterspritzt, wobei zwischen Organoblech und Rippenstruktur eine stoffschlüssige Verbindung ausgebildet wird, so dass ein einstückiges Bauteil gebildet ist. Mittels des Verfahrens hergestellte Sitzlehnenrückwände sind vorteilhafterweise gewichtsreduziert und besonders biegesteif.

In die Rippenstruktur werden erfindungsgemäß Kopfstützenhülsen, Schlossgehäuse, Gurtumlenkungen, Aufnahmen für eine Gurtaufrollvorrichtung und/oder Schlossaufnahmebereiche eingeformt. Besonders bevorzugt werden beim Schließen des Spritzwerkzeuges Abkantungen und/oder Laschen am Organoblech mittels zumindest eines Schiebers ausgeformt. Durch die Integration mehrerer Umform- und Ausformvorgänge, beispielweise Herstellung der Abkantungen und Laschen, Ausformung der Kopfstützenhülsen, Gurtumlenkungen und Schlossaufnahmen, in ein Spritzwerkzeug ist die Produktionszeit einer mittels des erfindungsgemäßen Verfahrens hergestellten Sitzlehnenrückwand signifikant verringert.

In einer vorteilhaften Ausführungsform umfasst das Organoblech eine thermoplastische Matrix und wird mit zumindest einer Rippenstruktur aus einem thermoplastischen Kunststoff verbunden, welcher mit dem Material des Organoblechs eine stoffschlüssige Verbindung ausbildet.. Dabei wird die Rippenstruktur bevorzugt auf eine Vorderseite des Organoblechs und somit der Sitzlehnenrückwand aufgebracht.

Erfindungsgemäß wird eine Umformung des Organoblechs direkt im Spritzwerkzeug durchgeführt.

Erfindungsgemäß werden bei einer Umformung des Organoblechs zumindest eine Versteifungssicke und eine rahmenförmige Sicke ausgebildet, wobei ein Querschnitt der Versteifungssicken und der rahmenförmigen Sicke halb- oder teilkreisförmig ausgeformt werden können. Die Versteifungssicken werden dabei derart im Organoblech angeordnet und eingebracht, dass sich die Versteifungssicken diagonal über das Organoblech von einem Rücksitzlehnenlagerbereich zu einer Lehneninnenseite und zur Aufnahme erstrecken. Dadurch wird eine besonders hohe Biegesteifigkeit der Sitzlehnenrückwand erreicht.

Erfindungsgemäß werden auf die Versteifungssicken Rippen aufgespritzt, wobei die Rippen zentral auf den Versteifungssicken angeordnet und in einem Fußbereich derart verbreitert werden können, dass ein sockelartiger Bereich und eine daraus resultierende vergrößerte Kontaktfläche zwischen Fußbereich der Rippe und der Versteifungssicke ausgebildet wird. Dies ermöglicht eine besonders haltbare stoffschlüssige Verbindung zwischen Fußbereich der Rippe und der jeweiligen Versteifungssicke.

An den Berührungspunkten zwischen den einzelnen Rippen der Rippenstruktur werden Knotenpunkte ausgeformt, wobei in diese Knotenpunkte jeweils eine Aussparung eingebracht wird. Dabei kann die Aussparung bevorzugt als herkömmliches Schraubloch für die Befestigung von Verstärkungsblechen oder dergleichen ausgebildet sein.

Zweckmäßigerweise können im Spritzwerkzeug randseitig der Sitzlehnenrückwand Profilelemente direkt an die Rippenstruktur angeformt werden, wobei jedes Profilelement mittels eines Filmscharniers schwenkbar mit der Rippenstruktur gekoppelt ist.

Nach der Entnahme der Sitzlehnenrückwand aus dem Spritzwerkzeug können die Profilelemente bedingt durch die Filmscharniere derart geschwenkt werden, dass sie die Rippenstruktur zumindest bereichsweise abdecken, wobei Rippenstruktur und Profilelemente stoffschlüssig unter Ausbildung eines geschlossenen Profils, welches eine erhöhte Torsionssteifigkeit aufweist und somit die gesamte Sitzlehnenrückwand versteift, verbunden werden.

Besonders vorteilhafterweise wird das Organoblech während einer Verarbeitung und/oder Umformung nicht vollständig konsolidiert, so dass eine Wandstärke des Organoblechs in vorgebbaren Bereichen verringert oder vergrößert ist. Dabei wird unter einer Konsolidierung die Her- oder Einstellung einer ursprünglichen Wandstärke des unverarbeiteten Organoblechs am verarbeiteten Organoblech und somit an der Sitzlehnenrückwand verstanden. Vorteilhafterweise sind mittels der Variation der Wandstärke des Organoblechs unterschiedliche Materialeigenschaften am verarbeiteten Organoblech und somit an der Sitzlehnenrückwand einstellbar. Beispielsweise bewirkt eine vergrößerte Wandstärke eine verbesserte Dehnrate. So können Einschlagbereiche einer Ladung in der Sitzlehnenrückwand derart ausgebildet werden, dass sie eine vergrößerte elastische Dehnbarkeit aufweisen und somit gezielt kinetische Energie der Ladung mittels einer elastischen und/oder plastischen Verformung abbauen.

Anhand der beigefügten schematischen Figuren wird die Erfindung näher erläutert.

Dabei zeigen:
- Figur 1: schematisch eine perspektivische Darstellung einer mittels des erfindungsgemäßen Verfahrens hergestellten Sitzlehnenrückwand in einer Frontansicht,
- Figur 2: schematisch eine Rückansicht einer mittels des erfindungsgemäßen Verfahrens hergestellten Sitzlehnenrückwand,
- Figur 3: schematisch eine Frontansicht einer mittels des erfindungsgemäßen Verfahrens hergestellten Sitzlehnenrückwand,
- Figur 4: schematisch eine Detailansicht eines umgeformten Organoblechs,
- Figur 5: schematisch eine Frontansicht eines umgeformten Organoblechs,
- Figur 6: schematisch eine weitere Frontansicht einer mittels des erfindungsgemäßen Verfahrens hergestellten Sitzlehnenrückwand,
- Figur 7: schematisch eine Schnittdarstellung einer auf eine im Organoblech ausgeformten Sicke aufgespritzte Rippe,
- Figur 8: schematisch eine Detailansicht von Kopfstützenhülsen,
- Figur 9: schematisch eine weitere Frontansicht einer mittels des erfindungsgemäßen Verfahrens hergestellten Sitzlehnenrückwand,
- Figur 10: schematisch eine Schnittdarstellung eines in der Sitzlehnenrückwand ausgeformten Schlossaufnahmebereichs,
- Figur 11: schematisch eine weitere Schnittdarstellung eines in der Sitzlehnenrückwand ausgeformten Schlossaufnahmebereichs,
- Figur 12: schematisch eine weitere Frontansicht einer mittels des erfindungsgemäßen Verfahrens hergestellten Sitzlehnenrückwand,
- Figur 13: schematisch eine Schnittdarstellung einer in der Sitzlehnenrückwand ausgeformten Gurtumlenkung,
- Figur 14: schematisch eine Detailansicht eines Knotenpunkts der Rippenstruktur,
- Figur 15: schematisch eine Detailansicht eines in der Sitzlehnenrückwand integrierten Schlossgehäuses,
- Figur 16: schematisch eine Frontansicht einer mittels des erfindungsgemäßen Verfahrens hergestellten Sitzlehnenrückwand in einer alternativen Ausführungsvariante und
- Figur 17: schematisch eine weitere Frontansicht der mittels des erfindungsgemäßen Verfahrens hergestellten Sitzlehnenrückwand in der alternativen Ausführungsvariante.

Einander entsprechende Teile sind in allen Figuren mit den gleichen Bezugszeichen versehen.

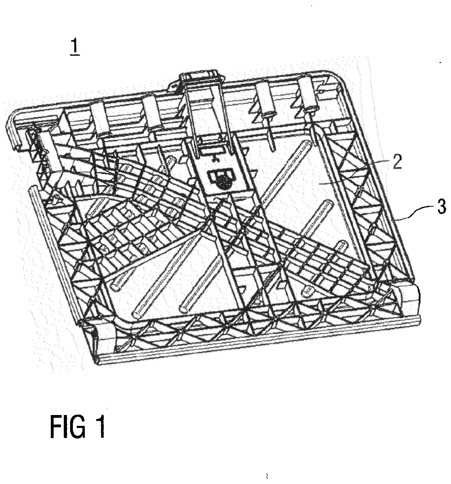

In Figur 1 ist schematisch eine perspektivische Darstellung einer mittels des erfindungsgemäßen Verfahrens hergestellten Sitzlehnenrückwand 1 in einer Frontansicht dargestellt.

Die Sitzlehnenrückwand 1 ist aus einem so genannten Organoblech 2 und einer Rippenstruktur 3 gebildet.

Das Organoblech 2 ist ein herkömmliches Organoblech. Ein Organoblech 2 ist ein flächiges Halbzeug aus einem thermoplastischen Kunststoff, in welchen ein Gewebe aus Glas-, Carbon- und/oder Aramidfasern oder einer Mischform aus diesen derart eingebracht ist, dass die Fasern vollständig mit thermoplastischem Kunststoff benetzt sind. Organobleche 2 sind somit endlosfaserverstärkte Thermoplastplatten. Organobleche 2 können durch Erwärmung und anschließendes Pressen in kurzen Zykluszeiten zu dreidimensionalen Bauteilen umgeformt werden.

Da das Organoblech 2 eine thermoplastische Matrix besitzt, kann es in einem nicht dargestellten Spritzwerkzeug aufgeschmolzen und mit gleichem Thermoplast umspritzt werden. Auf diese Weise wird die Rippenstruktur 3, welche aus einem thermoplastischen Kunststoff besteht, welcher mit dem Material des Organoblechs 2 eine stoffschlüssige Verbindung ausbildet, auf das Organoblech 2 aufgebracht, so dass aus Organoblech 2 und Rippenstruktur 3 ein integriertes, somit einstückiges Bauteil gebildet ist.

In einer bevorzugten Ausführungsvariante kann der thermoplastische Kunststoff der Rippenstruktur 3 aus dem gleichen Material bestehen wie das Organoblech 2.

In einer alternativen Ausführungsvariante weist der thermoplastische Kunststoff der Rippenstruktur 3 ähnliche oder vergleichbare Eigenschaften wie das Material des Organoblechs 2 auf, so dass eine homogene Vermischung und/oder Verschmelzung des thermoplastische Kunststoffs der Rippenstruktur 3 mit dem Material des Organoblechs 2 ermöglicht ist.

Die Rippenstruktur 3 wird vorzugsweise auf eine Vorderseite des Organoblechs 2 und somit der Sitzlehnenrückwand 1 aufgebracht.

Hierbei wird zwischen zwei Verfahren unterschieden. Beim ersten Verfahren wird das vorgeformte Organoblech 2 in ein Spritzwerkzeug eingelegt und mit dem thermoplastischen Kunststoff zur Ausbildung der Rippenstruktur 3 umspritzt. Beim zweiten Verfahren erfolgt die Umformung des Organoblechs 2 direkt im Spritzwerkzeug.

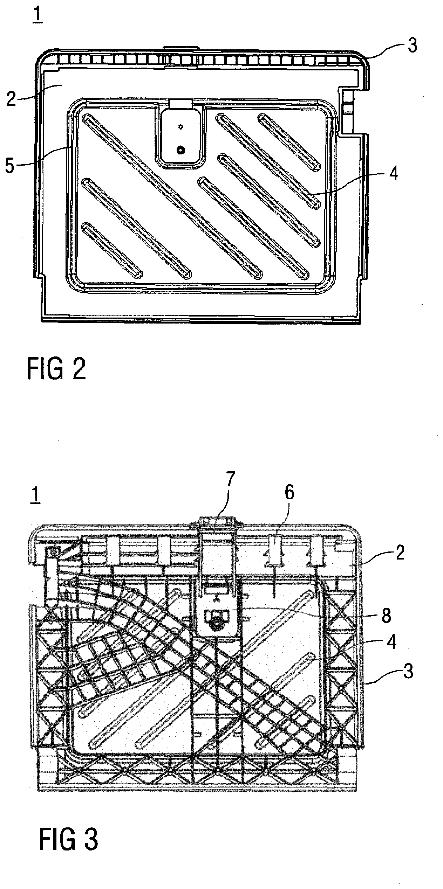

In Figur 2 ist schematisch eine Rückansicht der mittels des erfindungsgemäßen Verfahrens hergestellten Sitzlehnenrückwand 1 dargestellt. Im Organoblech 2 sind mehrere Versteifungssicken 4 ausgeformt, welche von einer umlaufenden rahmenförmigen Sicke 5 umschlossen werden. Ein Querschnitt der Versteifungssicken 4 und der rahmenförmigen Sicke 5 ist insbesondere halb- oder teilkreisförmig ausgeformt.

In Figur 3 ist schematisch eine Frontansicht der mittels des erfindungsgemäßen Verfahrens hergestellten Sitzlehnenrückwand 1 dargestellt. In der Rippenstruktur 3 sind Kopfstützenhülsen 6, Gurtumlenkung 7, eine Aufnahme 8 für eine Gurtaufrollvorrichtung ausgeformt.

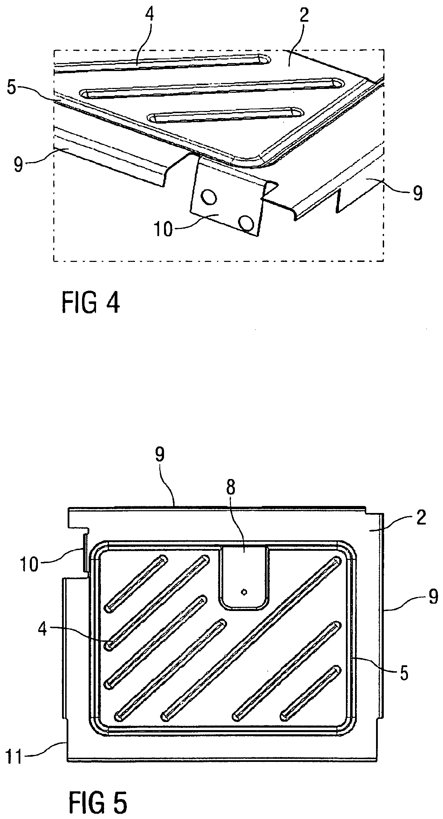

In Figur 4 ist schematisch eine Detailansicht des umgeformten Organoblechs 2 dargestellt. Randseitig des Organoblechs 2 sind Abkantungen 9 und Laschen 10 ausgebildet. Diese Abkantungen 9 und Laschen 10 werden beim Schließen des Spritzwerkzeuges am Organoblech 2 mittels zumindest eines nicht dargestellten Schiebers im Spritzwerkzeug ausgeformt.

In Figur 5 ist schematisch eine Frontansicht eines umgeformten Organoblechs 2 dargestellt. Eine Anordnung der Versteifungssicken 4 im Organoblech 2 erfolgt analog zu der Anordnung der Versteifungssicken in einer herkömmlichen, aus Blech gefertigten Sitzlehnenrückwand. Dabei erstrecken sich die Versteifungssicken 4 diagonal über das Organoblech 2 vom Rücksitzlehnenlagerbereich 11 zur Lehneninnenseite und zur Aufnahme 8. Die Versteifungssicken 4 haben vorzugsweise die gleichen geometrischen Abmessungen wie Versteifungssicken in einer herkömmlichen, aus Blech gefertigten Sitzlehnenrückwand.

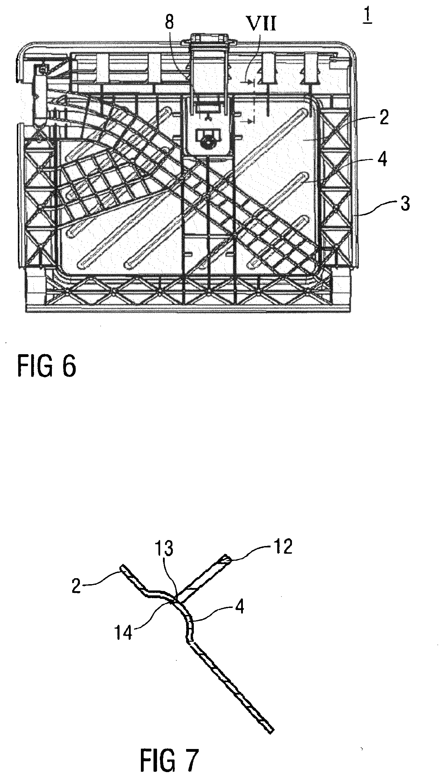

In Figur 6 ist schematisch eine weitere Frontansicht der mittels des erfindungsgemäßen Verfahrens hergestellten Sitzlehnenrückwand 1 dargestellt, wobei ein Schnittbereich markiert ist, welcher in der Schnittdarstellung in Figur 7 näher dargestellt wird. In Figur 7 ist schematisch eine Schnittdarstellung einer auf eine im Organoblech 2 ausgeformten Versteifungssicke 4 aufgespritzten Rippe 12 dargestellt.

Auf die Versteifungssicken 4 werden Rippen 12 aufgespritzt. Die Rippen 12 sind vorzugsweise zentral auf den Versteifungssicken 4 angeordnet und in einem Fußbereich 13 derart verbreitert, dass ein sockelartiger Bereich und eine daraus resultierende vergrößerte Kontaktfläche 14 zwischen Fußbereich 13 der Rippe 12 und Versteifungssicke 4 gebildet ist.

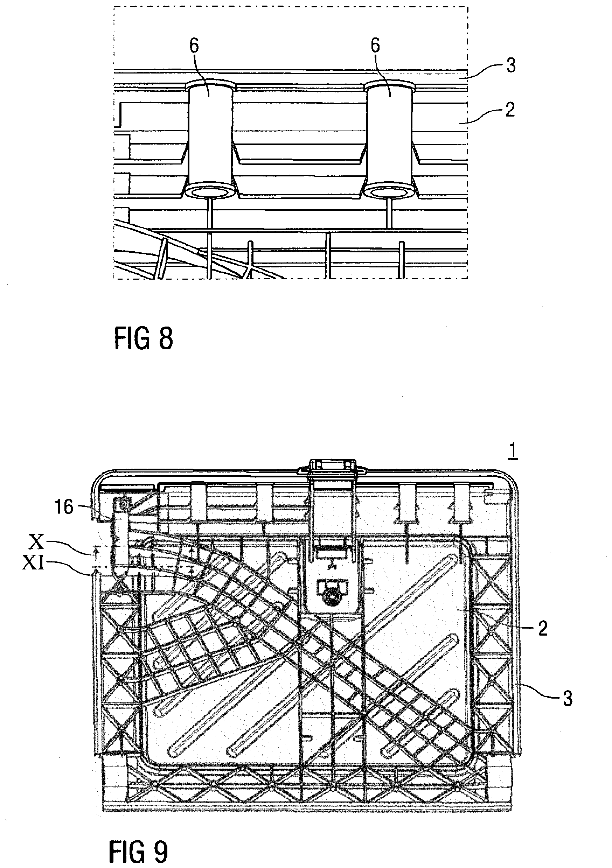

In Figur 8 ist schematisch eine Detailansicht von Kopfstützenhülsen 6 dargestellt. Die Kopfstützenhülsen 6 sind im oberen Bereich der Sitzlehnenrückwand 1 derart in die Rippenstruktur 3 integriert und ausgeformt, dass in ihnen Kopfstützenstangen herkömmlicher, nicht dargestellter Kopfstützen angeordnet werden können. Die Kopfstützenhülsen 6 werden vorzugsweise mittels eines Schiebers im Spritzwerkzeug ausgeformt.

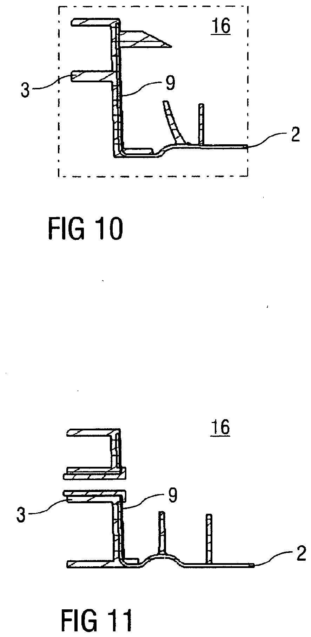

In Figur 9 ist schematisch eine weitere Frontansicht der mittels des erfindungsgemäßen Verfahrens hergestellten Sitzlehnenrückwand 1 dargestellt, wobei zwei Schnittbereiche markiert sind, welche in den Schnittdarstellungen in Figur 10 und 11 näher dargestellt werden. In Figur 10 ist schematisch eine Schnittdarstellung eines in der Sitzlehnenrückwand 1 ausgeformten Schlossaufnahmebereichs 16 dargestellt. In Figur 11 ist schematisch eine weitere Schnittdarstellung des in der Sitzlehnenrückwand 1 ausgeformten Schlossaufnahmebereichs 16 dargestellt.

Im Schlossaufnahmebereich 16 ist das Organoblech 2 randseitig derartig mit einer Abkantung 9 versehen, dass das nicht dargestellte Schloss der Rücksitzlehne direkt mit dem Organoblech 2 verbunden wird. Die Rippenstruktur 3 ist im Schlossaufnahmebereich 16 korrespondierend zum Schloss der Rücksitzlehne ausgeformt. Die direkte Anbindung des Schlosses der Rücksitzlehne an das Organoblech 2 ermöglicht eine besonders haltbare und steife Verbindung zwischen beiden Bauteilen.

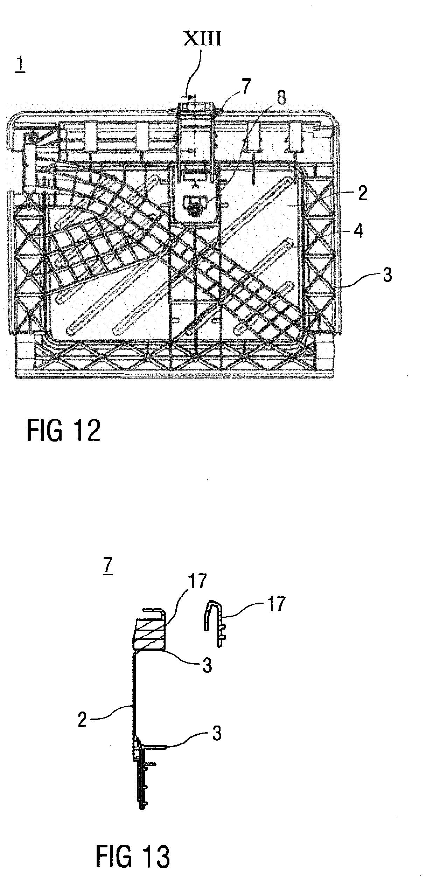

In Figur 12 ist schematisch eine weitere Frontansicht der mittels des erfindungsgemäßen Verfahrens hergestellten Sitzlehnenrückwand 1 dargestellt, wobei ein Schnittbereich markiert ist, welcher in der Schnittdarstellung in Figur 13 näher dargestellt wird. In Figur 13 ist schematisch eine Schnittdarstellung der in der Sitzlehnenrückwand 1 ausgeformten Gurtumlenkung 7 dargestellt. Die Gurtumlenkung 7 ist in der dargestellten Art und Weise in die Rippenstruktur 3 integriert, wobei im gesamten die Gurtumlenkung 7 bildenden Bereich 17 eine Wandstärke von 5 mm in der Rippenstruktur 3 ausgeformt ist.

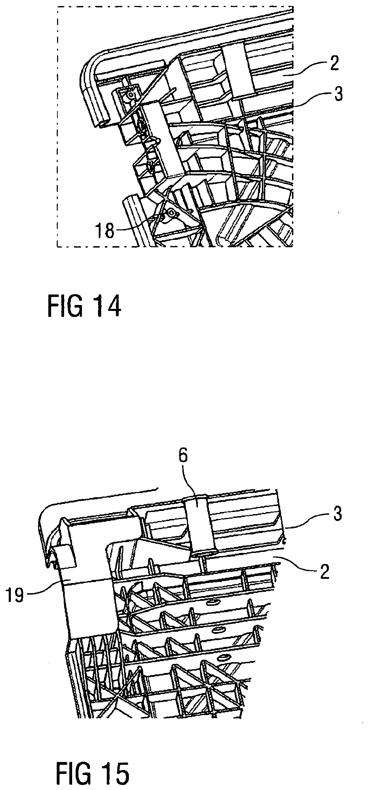

In Figur 14 ist schematisch eine Detailansicht eines Knotenpunkts 18 der Rippenstruktur 3 dargestellt. Als Knotenpunkt 18 werden Bereiche in der Rippenstruktur 3 bezeichnet, in denen eine Vielzahl von Rippen 12 aufeinandertreffen und eine Materialanhäufung ausbilden. In eine solche Materialanhäufung bzw. in einen solchen Knotenpunkt 18 kann ein Loch eingebracht werden, dass beispielweise als herkömmliches Schraubloch für die Befestigung von Verstärkungsblechen oder dergleichen ausgebildet ist. Die Löcher in den Knotenpunkten der Rippen können auch als Schraublöcher für die Befestigung von z.B. Verstärkungsblechen verwendet werden.

In Figur 14 ist schematisch eine Detailansicht eines in der Sitzlehnenrückwand 1 integrierten Schlossgehäuses 15 dargestellt. Das Schlossgehäuse 15 ist in einer besonders vorteilhaften Ausführungsform der Erfindung in der dargestellten Art und Weise in die Rippenstruktur 3 integriert, wobei das Schlossgehäuse 15 korrespondierend zu einem darin einklipsbaren, nicht dargestellten Gurtschlossauslösemechanismus ausgeformt ist. Dadurch werden das Gurtschloss und der Gurtschlossauslösemechanismus signifikant verstärkt.

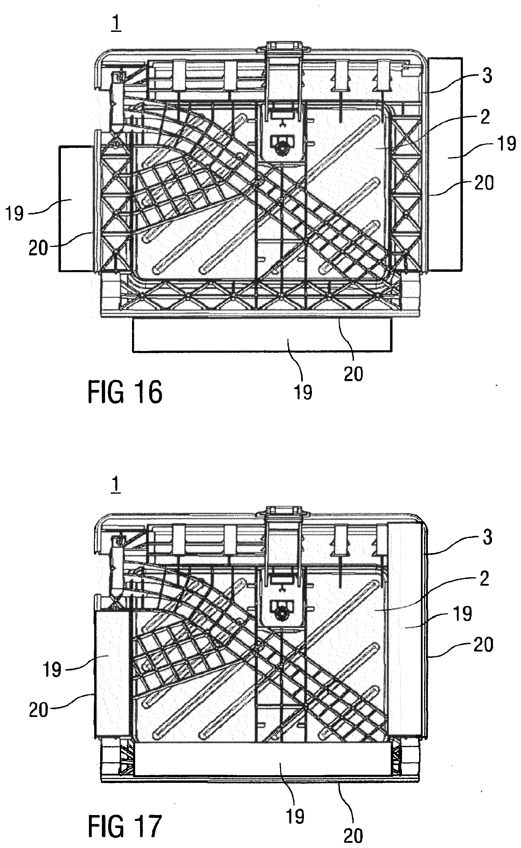

In Figur 16 ist schematisch eine Frontansicht einer mittels des erfindungsgemäßen Verfahrens hergestellten Sitzlehnenrückwand 1 in einer alternativen Ausführungsvariante dargestellt. In dieser Ausführungsvariante werden im Spritzwerkzeug randseitig der Sitzlehnenrückwand 1 Profilelemente 19 direkt an die Rippenstruktur 3 angeformt. Die Profilelemente 19 sind mittels herkömmlicher Filmscharniere 20 schwenkbar mit der Rippenstruktur 3 gekoppelt.

In Figur 17 ist schematisch eine weitere Frontansicht der mittels des erfindungsgemäßen Verfahrens hergestellten Sitzlehnenrückwand 1 in der alternativen Ausführungsvariante mit angeformten Profilelemente 19 dargestellt. Nach der Entnahme aus dem Spritzwerkzeug können die Profilelemente 19 bedingt durch die Filmscharniere 20 derart geschwenkt werden, dass sie die Rippenstruktur 3 zumindest bereichsweise abdecken. Die Filmscharniere 20 können mit der Rippenstruktur 3 verklebt oder verschweißt werden, wodurch ein geschlossenes Profil entsteht, welches eine erhöhte Torsionssteifigkeit aufweist und somit die gesamte Sitzlehnenrückwand 1 versteift.

Während eines Verarbeitungsprozesses des Organoblechs 2 wird üblicherweise das Material des Organoblechs 2 vollständig konsolidiert. Dabei wird unter einer Konsolidierung die Her- oder Einstellung einer ursprünglichen Wandstärke des unverarbeiteten Organoblechs 2 am verarbeiteten Organoblech 2 und somit an der Sitzlehnenrückwand 1 verstanden. Dadurch weist das verarbeitete Organoblech 2 die Materialeigenschaften des unverarbeiteten Organoblechs 2 auf. Die vollständige Konsolidierung wird dabei mittels eines gleichmäßigen Anpressdrucks im Spritzwerkzeug erreicht.

In einer besonders vorteilhaften Ausführungsform wird das Organoblech 2 während einer Verarbeitung und/oder Umformung nicht vollständig konsolidiert, so dass eine Wandstärke des Organoblechs 2 in vorgebbaren Bereichen verringert oder vergrößert ist. Vorteilhafterweise sind mittels einer solchen Variation der Wandstärke des Organoblechs 2 unterschiedliche Materialeigenschaften am verarbeiteten Organoblech 2 und somit an der Sitzlehnenrückwand 1 einstellbar. Beispielsweise bewirkt eine vergrößerte Wandstärke eine verbesserte Dehnrate und eine daraus resultierende vergrößerte Elastizität des verarbeiteten Organoblechs 2 und somit der Sitzlehnenrückwand 1. So können Einschlagbereiche einer Ladung in der Sitzlehnenrückwand 1 derart ausgebildet werden, dass sie eine vergrößerte elastische Dehnbarkeit aufweisen und somit gezielt kinetische Energie der Ladung mittels einer elastischen und/oder plastischen Verformung abbauen.

### Bezugszeichenliste

- 1: Sitzlehnenrückwand
- 2: Organoblech
- 3: Rippenstruktur
- 4: Versteifungssicke
- 5: Sicke
- 6: Kopfstützenhülse
- 7: Gurtumlenkung
- 8: Aufnahme
- 9: Abkantung
- 10: Lasche
- 11: Rücksitzlehnenlagerbereich
- 12: Rippe
- 13: Fußbereich
- 14: Kontaktfläche
- 15: Schlossgehäuse
- 16: Schlossaufnahmebereich
- 17: Bereich
- 18: Knotenpunkt
- 19: Profilelement
- 20: Filmscharnier

## Patentansprüche

1. Verfahren zur Herstellung einer Sitzlehnenrückwand (1) aus zumindest einem Organoblech (2), wobei zumindest ein Organoblech (2) in einem Spritzwerkzeug mit einer Rippenstruktur (3) hinterspritzt wird, wobei zwischen Organoblech (2) und Rippenstruktur (3) eine stoffschlüssige Verbindung ausgebildet wird, so dass ein einstückiges Bauteil gebildet ist,
wobei das Organoblech (2) ein flächiges Halbzeug aus einem thermoplastischen Kunststoff, in welchen ein Gewebe aus Glas-, Carbon- und/oder Aramidfasern oder einer Mischform aus diesen derart eingebracht ist, dass die Fasern vollständig mit thermoplastischem Kunststoff benetzt sind und wobei bei einer Umformung des Organoblechs (2) direkt im Spritzwerkzeug mehrere Versteifungssicken (4) und eine rahmenförmige Sicke (5) ausgebildet werden und auf die Versteifungssicken (4) Rippen (12) aufgespritzt werden und wobei in die Rippenstruktur (3) Kopfstützenhülsen (6), Schlossgehäuse (15), Gurtumlenkungen (7), Aufnahmen (8) für eine Gurtaufrollvorrichtung und/oder Schlossaufnahmebereiche (16) eingeformt werden.

2. Verfahren nach Anspruch 1,
**dadurch gekennzeichnet, dass** beim Schließen des Spritzwerkzeuges Abkantungen (9) und/oder Laschen (10) am Organoblech (2) mittels zumindest eines Schiebers ausgeformt werden.

3. Verfahren nach einem der vorherigen Ansprüche,
**dadurch gekennzeichnet, dass** das Organoblech (2) eine thermoplastische Matrix umfasst und mit zumindest einer Rippenstruktur (3) aus einem thermoplastischen Kunststoff verbunden wird, welcher mit dem Material des Organoblechs (2) eine stoffschlüssige Verbindung ausbildet.

4. Verfahren nach einem der vorherigen Ansprüche,
**dadurch gekennzeichnet, dass** die Rippenstruktur (3) auf eine Vorderseite des Organoblechs (2) und somit der Sitzlehnenrückwand (1) aufgebracht wird.

5. Verfahren nach Anspruch 1 bis 4,
**dadurch gekennzeichnet, dass** ein vorgeformtes Organoblech (2) in ein Spritzwerkzeug eingelegt und mit dem thermoplastischen Kunststoff zur Ausbildung der Rippenstruktur (3) umspritzt wird.

6. Verfahren nach einem der vorhergehenden Ansprüche,
**dadurch gekennzeichnet, dass** ein Querschnitt der Versteifungssicken (4) und der rahmenförmigen Sicke (5) halb- oder teilkreisförmig ausgeformt wird.

7. Verfahren nach einem der vorhergehenden Ansprüche,
**dadurch gekennzeichnet, dass** die Versteifungssicken (4) derart im Organoblech (2) angeordnet und eingebracht werden, dass sich die Versteifungssicken (4) diagonal über das Organoblech (2) von einem Rücksitzlehnenlagerbereich (11) zu einer Lehneninnenseite und zur Aufnahme (8) erstrecken.

8. Verfahren nach einem der vorhergehenden Ansprüche,
**dadurch gekennzeichnet, dass** die Rippen (12) zentral auf den Versteifungssicken (4) angeordnet und in einem Fußbereich (13) derart verbreitert werden, dass ein sockelartiger Bereich und eine daraus resultierende vergrößerte Kontaktfläche (14) zwischen Fußbereich (13) der Rippe (12) und der Versteifungssicke (4) ausgebildet wird.

9. Verfahren nach einem der vorherigen Ansprüche,
**dadurch gekennzeichnet, dass** an den Berührungspunkten zwischen den einzelnen Rippen (12) der Rippenstruktur (3) Knotenpunkte (18) ausgeformt werden, wobei in diese Knotenpunkte (18) jeweils eine Aussparung eingebracht wird.

10. Verfahren nach einem der vorherigen Ansprüche,
**dadurch gekennzeichnet, dass** im Spritzwerkzeug randseitig der Sitzlehnenrückwand (1) Profilelemente (19) direkt an die Rippenstruktur (3) angeformt werden, wobei jedes Profilelement (19) mittels eines Filmscharniers (20) schwenkbar mit der Rippenstruktur (3) gekoppelt ist.

11. Verfahren nach Anspruch 10,
**dadurch gekennzeichnet, dass** nach der Entnahme der Sitzlehnenrückwand (1) aus dem Spritzwerkzeug die Profilelemente (19) bedingt durch die Filmscharniere (20) derart geschwenkt werden, dass sie die Rippenstruktur (3) zumindest bereichsweise abdecken, wobei Rippenstruktur (3) und Profilelemente (19) stoffschlüssig unter Ausbildung eines geschlossenen Profils verbunden werden.

12. Verfahren nach einem der vorherigen Ansprüche,
**dadurch gekennzeichnet, dass** das Organoblech (2) während einer Verarbeitung und/oder Umformung nicht vollständig konsolidiert wird, so dass eine Wandstärke des Organoblechs (2) in vorgebbaren Bereichen verringert oder vergrößert ist.

## Claims

1. A method for producing a rear wall (1) of a seat back from at least one organosheet (2), wherein at least one organosheet (2) is back-molded in an injection molding die with a rib structure (3), a material-to-material connection being formed between the organosheet (2) and the rib structure (3), with the result that a single-piece component is formed,
whereby the organosheet (2) is a sheet-like semifinished product made of a thermoplastic material into which a woven fabric of glass, carbon and/or aramid fibers or a mixed form thereof has been introduced in such a way that the fibers have been completely wetted with thermoplastic material, and whereby, during reshaping of the organosheet (2), several reinforcing beads (4) and a frame-shaped bead (5) are formed directly in the injection molding die and ribs (12) are molded onto the reinforcing beads (4), and whereby headrest bushes (6), lock housings (15), belt deflection means (7), receptacles (8) for a belt reel apparatus and/or lock receptacle regions (16) are molded into the rib structure (3).

2. The method as claimed in claim 1,
**characterized in that**, during the closing of the injection molding die, angled-over edges (9) and/or brackets (10) are shaped out on the organosheet (2) by means of at least one slide.

3. The method as claimed in one of the preceding claims,
**characterized in that** the organosheet (2) comprises a thermoplastic matrix and is connected to at least one rib structure (3) made from a thermoplastic which forms a material-to-material connection with the material of the organosheet (2).

4. The method as claimed in one of the preceding claims,
**characterized in that** the rib structure (3) is applied to a front side of the organosheet (2) and therefore to the rear wall (1) of the seat back.

5. The method as claimed in claims 1 to 4, **characterized in that** a preformed organosheet (2) is inserted into an injection molding die and is encapsulated by injection molding with the thermoplastic in order to form the rib structure (3) .

6. The method as claimed in one of the preceding claims,
**characterized in that** a cross section of the reinforcing beads (4) and the frame-shaped bead (5) is shaped out to be semicircular or partially circular.

7. The method as claimed in one of the preceding claims,
**characterized in that** the reinforcing beads (4) are arranged and made in the organosheet (2) in such a way that the reinforcing beads (4) extend diagonally over the organosheet (2) from a rear seat back bearing region (11) to a seat back inner side and to the receptacle (8).

8. The method as claimed in one of the preceding claims,
**characterized in that** the ribs (12) are arranged centrally on the reinforcing beads (4) and are widened in a base region (13) in such a way that a pedestal-like region and an enlarged contact area (14) which results therefrom between the base region (13) of the rib (12) and the reinforcing bead (4) are formed.

9. The method as claimed in one of the preceding claims,
**characterized in that** intersection points (18) are shaped out at the contact points between the individual ribs (12) of the rib structure (3), in each case one cutout being made in said intersection points (18).

10. The method as claimed in one of the preceding claims,
**characterized in that** profile elements (19) are molded directly onto the rib structure (3) in the injection molding die on the edge side of the rear wall (1) of the seat back, each profile element (19) being coupled pivotably to the rib structure (3) by means of an integral hinge (20).

11. The method as claimed in claim 10,
**characterized in that**, after the removal of the rear wall (1) of the seat back from the injection molding die, the profile elements (19) are pivoted, due to the integral hinges (20), in such a way that they cover the rib structure (3) at least in regions, the rib structure (3) and profile elements (19) being connected in a material-to-material manner with the formation of a closed profile.

12. The method as claimed in one of the preceding claims,
**characterized in that** the organosheet (2) is not consolidated completely during processing and/or reshaping, with the result that a wall thickness of the organosheet (2) is reduced or increased within predefinable ranges.

## Revendications

1. Procédé pour fabriquer une paroi arrière de dossier de siège (1) constituée d'au moins une tôle organique (2), au moins une tôle organique (2) étant surmoulée par injection par l'arrière avec une structure nervurée (3) dans un outil de moulage, une connexion par engagement par liaison de matière entre la tôle organique (2) et la structure nervurée (3) étant réalisée de telle sorte qu'un composant d'une seule pièce soit formé, la tôle organique (2) étant un produit semi-fini constitué d'un plastique thermoplastique dans lequel est introduit un tissu de fibres de verre, de carbone et/ou d'aramide ou une forme mélangée de celles-ci, de telle sorte que les fibres soient entièrement mouillées avec le plastique thermoplastique et, lors d'une déformation de la tôle organique (2), plusieurs moulures de renforcement (4) et une moulure (5) en forme de cadre étant réalisées directement dans l'outil de moulage, et des nervures (12) étant moulées pardessus les moulures de renforcement (4), et dans la structure nervurée (3) étant formés des manchons d'appui-tête (6), un boîtier de verrouillage (15), des renvois de ceinture (7), des logements (8) pour un dispositif d'enroulement de ceinture et/ou des régions de logement pour le verrouillage (16).

2. Procédé selon la revendication 1,
**caractérisé en ce que** lors de la fermeture de l'outil de moulage, des parties recourbées (9) et/ou des pattes (10) sont formées à partir de la tôle organique (2) au moyen d'au moins un coulisseau.

3. Procédé selon l'une quelconque des revendications précédentes,
**caractérisé en ce que** la tôle organique (2) comprend une matrice thermoplastique et est connectée à au moins une structure nervurée (3) constituée d'un plastique thermoplastique, qui constitue une connexion par engagement par liaison de matière avec le matériau de la tôle organique (2) .

4. Procédé selon l'une quelconque des revendications précédentes,
**caractérisé en ce que** la structure nervurée (3) est appliquée sur un côté avant de la tôle organique (2) et par conséquent de la paroi arrière de dossier de siège (1).

5. Procédé selon les revendications 1 à 4,
**caractérisé en ce qu'**une tôle organique préformée (2) est introduite dans un outil de moulage et est surmoulée avec le plastique thermoplastique pour réaliser la structure nervurée (3).

6. Procédé selon l'une quelconque des revendications précédentes,
**caractérisé en ce qu'**une section transversale des moulures de renforcement (4) et de la moulure en forme de cadre (5) est formée en forme de demi-cercle ou de cercle partiel.

7. Procédé selon l'une quelconque des revendications précédentes,
**caractérisé en ce que** les moulures de renforcement (4) sont disposées et pratiquées dans la tôle organique (2) de telle sorte que les moulures de renforcement (4) s'étendent en diagonale sur la tôle organique (2) depuis une région de support de dossier de siège arrière (11) jusqu'à un côté intérieur du dossier et jusqu'au logement (8).

8. Procédé selon l'une quelconque des revendications précédentes,
**caractérisé en ce que** les nervures (12) sont disposées centralement sur les moulures de renforcement (4) et sont élargies dans une région de base (13) de telle sorte qu'une région en forme de socle et une surface de contact agrandie en résultant (14) soient réalisées entre la région de base (13) de la nervure (12) et la moulure de renforcement (4).

9. Procédé selon l'une quelconque des revendications précédentes,
**caractérisé en ce que** des points de noeuds (18) sont formés au niveau des points de contact entre les nervures individuelles (12) de la structure nervurée (3), un évidement étant à chaque fois pratiqué dans ces points de noeuds (18).

10. Procédé selon l'une quelconque des revendications précédentes,
**caractérisé en ce que** des éléments profilés (19) sont formés directement au niveau de la structure nervurée (3) dans l'outil de moulage du côté des bords de la paroi arrière du dossier de siège (1), chaque élément profilé (19) étant accouplé de manière pivotante à la structure nervurée (3) au moyen d'une charnière à film (20).

11. Procédé selon la revendication 10,
**caractérisé en ce qu'**après l'enlèvement de la paroi arrière du dossier de siège (1) de l'outil de moulage, les éléments profilés (19) sont pivotés sous l'effet de la charnière à film (20) de telle sorte qu'ils recouvrent au moins en partie la structure nervurée (3), la structure nervurée (3) et les éléments profilés (19) étant connectés par engagement par liaison de matière en formant un profilé fermé.

12. Procédé selon l'une quelconque des revendications précédentes,
**caractérisé en ce que** la tôle organique (2) n'est pas complètement consolidée pendant un traitement et/ou une déformation, de telle sorte qu'une épaisseur de paroi de la tôle organique (2) soit réduite ou agrandie dans des régions prédéfinissables.
